(19) Europäisches Patentamt
European Patent Office
Office européen des brevets

(11) **EP 3 654 507 B1**

(12) **EUROPÄISCHE PATENTSCHRIFT**

(45) Veröffentlichungstag und Bekanntmachung des Hinweises auf die Patenterteilung:
**11.05.2022 Patentblatt 2022/19**

(21) Anmeldenummer: **18206768.6**

(22) Anmeldetag: **16.11.2018**

(51) Internationale Patentklassifikation (IPC):
**H02M 1/32** *(2007.01)* **H02M 1/36** *(2007.01)*
**H02H 9/00** *(2006.01)*

(52) Gemeinsame Patentklassifikation (CPC):
**H02M 1/32; H02H 9/001; H02M 1/36**

(54) **ÜBERWACHBARES ELEKTRISCHES BAUELEMENT MIT MINDESTENS EINER FUNKTIONALEN AUSRICHTUNG ALS KONDENSATOR**

MONITORABLE ELECTRICAL COMPONENT WITH AT LEAST ONE FUNCTIONAL PURPOSE AS CAPACITOR

COMPOSANT ÉLECTRIQUE POUVANT ÊTRE SURVEILLÉ DOTÉ D'AU MOINS UN BUT FONCTIONNEL EN TANT QUE CONDENSATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.05.2020 Patentblatt 2020/21**

(73) Patentinhaber: **Siemens Aktiengesellschaft 80333 München (DE)**

(72) Erfinder: **Feil, Wolfgang 92421 Schwandorf (DE)**

(56) Entgegenhaltungen:
EP-A1- 2 400 649        EP-A1- 2 562 937
EP-A1- 3 379 671        CN-A- 104 578 815
CN-A- 108 068 835       CN-U- 206 306 853
CN-Y- 201 069 461       US-A1- 2012 153 973
US-A1- 2015 180 400     US-A1- 2018 134 169

**Beschreibung**

Die Erfindung betrifft ein überwachbares elektrisches Bauelement mit mindestens einer funktionalen Ausrichtung als Kondensator innerhalb einer Topologie einer Vorladeschaltung in der Umgebung eines Stromverteilungsnetzes, ein Schaltbild, insbesondere innerhalb eines Stromverteilungsnetzes, aufweisend eine 2-Pol-Anordnung mit einem überwachbaren elektrischen Bauelement mit mindestens einer funktionalen Ausrichtung als Kondensator und mit einer Vorladeschaltung, ein Stromverteilungsnetz mit einem Schaltbild als Zwischenkreis, aufweisend mindestens eine 2-Pol-Anordnung mit mindestens einem überwachbaren elektrischen Bauelement mit mindestens einer funktionalen Ausrichtung als Kondensator und mit mindestens einer Vorladeschaltung, ein Verfahren zum Betrieb einer überwachten Vorladeschaltung in Form eines Zwischenkreises aufweisend eine Vorladeschaltung und ein überwachbares elektrisches Bauelement mit mindestens einer funktionalen Ausrichtung als Kondensator, insbesondere in einer Anwendung in einem Stromverteilungsnetz sowie die Verwendung eines überwachbaren elektrischen Bauelements mit mindestens einer funktionalen Ausrichtung als Kondensator in Automatisierungsanlagen, in der Antriebstechnik oder der Leistungselektronik.

Zur Stabilisierung der Gleichspannung innerhalb einer Topologie eines verteilten DC-Netzes werden nahe am Verbraucher typischerweise Stützkondensatoren parallel zwischen L+ und L-eingebaut. Dies ist insbesondere dann notwendig, wenn Applikationen vorliegen, die ein getaktetes Ausgangssignal formen, wie z.B. Wechselrichter. Die Kapazitäten dieser Kondensatoren sind ihrer Funktion entsprechend vergleichsweise groß (~mF). Ein technisches Problem tritt beim Zuschalten dieser Stützkondensatoren an den DC-Bus auf. Beim harten Zuschalten auf einen vollständig entladenen Kondensator treten hohe Inrush-Ströme auf, die technisch nur schwer zu beherrschen sind und zudem die Lebensdauer der eingesetzten Komponenten (Kapazitäten, Schalterelemente, Klemmen, Leitungen, Kondensatoren etc.) negativ beeinflussen. Zum Schutz wird ein Widerstand in Reihe zum Leistungspfad geschaltet, über welchem der Strom begrenzt wird. Sind alle Kapazitäten ausreichend vorgeladen, wird dieser Widerstand mittels eines Schalters überbrückt und der Leistungspfad freigegeben. Zur Vermeidung der hohen Inrush-Ströme sind diese Vorladeschaltungen üblich. Vorladeschaltungen sind im Allgemeinen aus dem Stand der Technik bekannt, z.B. aus EP2400649, US2018134169, CN201069461Y, US2015180400 und EP2562937.

Stützkondensator und Vorladeschaltung werden normalerweise räumlich weit getrennt voneinander verbaut, so dass das Signal einer Überwachungssensorik am Stützkondensator (z.B. Temperaturüberwachung) nur mit einigem Aufwand in die Vorladeschaltung gebracht werden kann. Es ist auch zweckmäßig, wenn während des Anlagenbetriebs gewährleistet ist, dass die Vorladekomponenten auch auf den dahinter liegenden Stützkondensator abgestimmt sind, auch nachdem z.B. ein solcher Kondensator ausgetauscht wurde. Zudem sollte gewährleistet sein, dass eine übergeordnete Anlagensteuerung dafür sorgt, dass eine unter Umständen einzuhaltende maximale Anzahl an Vorladungszyklen pro Zeiteinheit auch eingehalten wird. Dies ist insbesondere dann erforderlich, wenn der Vorladewiderstand bei ungünstigen Anlagenbedingungen thermisch stärker belastet wird und Zeit zum Abkühlen benötigt.

Demgemäß besteht die Aufgabe der vorliegenden Erfindung darin, ein verbessertes Schutzkonzept für ein elektrisches Bauelement mit mindestens einer funktionalen Ausrichtung als Kondensator in der Umgebung eines Stromverteilungsnetzes zu schaffen sowie ein dazugehöriges Verfahren und mögliche Anwendungen anzugeben.

Diese Aufgabe wird erfindungsgemäß gelöst durch eine Zweipolanordnung mit einer Vorladeschaltung und einem überwachbaren elektrischen Bauelement nach Anspruch 1, einem Verfahren nach Anspruch 9 zum Betrieb einer überwachten Vorladeschaltung in Form eines Zwischenkreises aufweisend eine Vorladeschaltung und ein überwachbares elektrisches Bauelement mit mindestens einer funktionalen Ausrichtung als Kondensator in der 2-Pol-Anordnung nach Anspruch 1, einer Verwendung der Zweipolanordnung in einer Automatisierungsanlage nach Anspruch 16, einer Verwendung der Zweipolanordnung in der Antriebstechnik nach Anspruch 17, und einer Verwendung der Zweipolanordnung in der Leistungselektronik nach Anspruch 18. Vorteilhafte Aus- und Weiterbildungen, welche einzeln oder in Kombination miteinander eingesetzt werden können, sind jeweils der Gegenstand der abhängigen Ansprüche.

Die Erfindung zeichnet sich dadurch aus, dass die Überwachung, insbesondere zum Schutz vor einer Überlastung, durch einen Kontrollprozessor ausgebildet ist, welcher Messwerte aufnimmt und auswertet.

Das erfindungsgemäße elektrische Bauelement mit mindestens einer funktionalen Ausrichtung als Kondensator ist durch den übergeordneten Kontrollprozessor, welcher über ein, vorzugsweise zusätzlich eingesetztes oder im Kontrollprozessor integriertes, Messgerät das Monitoring für das elektrische Bauelement übernimmt, überwachbar ausgeführt. Der Kern der Erfindung besteht hier darin, dass das überwachbare elektrische Bauelement mit mindestens einer funktionalen Ausrichtung als Kondensator durch den übergeordneten Kontrollprozessor in Kombination mit einem Messgerät gekennzeichnet ist. Diese Einheit aus Kontrollprozessor in Kombination mit einem Messgerät und dem überwachbaren elektrischen Bauelement mit mindestens einer funktionalen Ausrichtung als Kondensator ist das Grundgerüst bzw. die wesentliche Schalteinheit für die weitergehenden Anwendungen in einem Schaltbild, insbesondere einer Schutzschaltung und einem Stromverteilungsnetz, insbesondere DC- oder Hybridnetz. Die Schalteinheit umfasst demgemäß das überwachbare elektrische Bauelement mit mindestens einer funktionalen Ausrichtung als Kondensator sowie den übergeordneten Kontrollprozessor mit Messgerät, welcher vorzugsweise dezentral, also als Bestandteil der Vorladeschaltung platziert sein kann. Es ist aber auch denkbar, ihn zentral im Bereich einer Kommunikationsschnittstelle zu positionieren.

Eine Vorladung wird äußerst selten als separates Gerät verbaut. Vielmehr wird die Funktion Vorladung immer in einem größeren Gerät benutzt bspw. einem Umrichter oder einem DC-Schalter.

Bei diesen Geräten ist die Messung einiger betriebsrelevanter Größen ohnehin notwendig. Da das erfindungsgemäße überwachbare elektrische Bauelement mit mindestens einer funktionalen Ausrichtung als Kondensator von einem übergeordneten Kontrollprozessor, welcher am Gerät integriert oder weiter außerhalb im Bereich einer Kommunikationsschnittstelle des Netzes angeordnet sein kann, geschaltet werden kann, kann dieser mit Hilfe von speziellen Messungen auch den notwendigen Schutz des elektrischen Bauelements bzw. des Kondensators gewährleisten.

Als Messungen kommen hier der DC-Strom oder die Eingangs- und Ausgangsspannung in Frage. Aus der Eingangs- und Ausgangsspannung kann über das Ohm'sche Gesetz entsprechend auch der DC-Strom berechnet werden.

$$I = (U_{ein} - U_{aus})/R_V$$

Mit dieser Information kann die Steuerung entscheiden, ob es sich um einen normalen Vorladevorgang handelt, welcher durch den Kondensator in Form des erfindungsgemäßen elektrischen Bauelements abgedeckt ist, oder der Kondensator überlastet wird.

Die einfachste Ausführung einer solchen Überprüfung betrachtet nach einer gewissen Zeit, in der die Vorladung normalerweise abgeschlossen sein sollte, ob der Stromfluss weiterhin größer ist als ein vorgegebener Wert. Etwas aufwendigere Ausführungen überprüfen in unterschiedlichen Zeitschritten, ob ein Stromfluss jeweils unter einem vorgegebenen Wert liegt.

Als fortführendes Ausführungsbeispiel kann entweder die Vorladung nur in eine Richtung zugelassen werden, also unidirektional. Es muss dann gelten dass $I_{DC} > 0$ ist während der Vorladung.

Als weiteres Ausführungsbeispiel kann aber auch gelten, dass die Vorladung bidirektional durchgeführt werden kann, also nur der Betrag des Stroms überprüft wird.

Der Vorteil dieser Erfindung besteht darin, dass Vorladeschaltung und Stützkondensatoren bzw. das elektrische Bauelement dauerhaft optimal abgestimmt in der Anlage verbaut sind. Die Stützkapazität und die zugehörige Vorladeschaltung werden zusammengebracht und als einziger 2-Pol verbaut. Auch eine eventuell benötigte zusätzliche Sensorik (Temperatur-, Strom-, Spannungs- und max. Schaltspielüberwachung) ist mit integriert.

Es ist mit dieser Erfindung gewährleistet, dass die Vorladeschaltung immer optimal auf die verbaute Kapazität abgestimmt ist, gerade auch nach dem Auswechseln der Komponenten. Zudem kann die Vorladung ohne zusätzlichen Aufwand für eine Kommunikation mit Sensorik ortsnah überwacht werden. Weiterhin bietet ein solcher Ansatz die Möglichkeit, Technologien einzusetzen, welche ein Höchstmaß an Integration für die eingesetzte Funktionalität versprechen. Neben einer einfachen Vorschaltung mit Relaiskontakten und eingebauter Überwachung ist der Einsatz von mikromechanischen Schaltern denkbar, welche hochparallel in optimaler zeitlicher Abstimmung kleine Kapazitäten laden, welche in Summe die geforderte Kondensatorkapazität ergeben. Der erhöhte Schaltungsaufwand hält sich durch die Fertigung mittels Mikrostrukturierung in Grenzen. Mit diesem erfindungsgemäßen Konzept ist es auch möglich, eine Kondensatorbaureihe durch entsprechende Parallelschaltung von Komponenten zu dimensionieren bzw. auch Reservekapazität vorzuhalten, um Alterungseffekte auszugleichen. Zudem könnte eine Überwachungssensorik vorteilhaft im gleichen Strukturierungsprozess mit in die Strombahnen integriert werden.

Alternativ zum Vorladewiderstand kann man auch getaktete Ladeschaltungen mit Halbleiterschaltern einsetzen. Dies hat z.B. den Vorteil, dass man die Vorladeschaltung für unterschiedliche Spannungsebenen automatisch anpassen kann. Vorteilhafterweise baut man die Vorladeschaltung parallel zu einem ohnehin vorhandenen Schaltkontakt auf, der sich für den Schaltbetrieb in der Anlage befindet. Dabei ist jedoch zu beachten, dass man gegebene Anforderungen an dieses Schaltelement wie z.B. galvanisches Trennen durch die Parallelschaltung weiterhin erfüllt.

Es entspricht einer speziellen Ausführungsform des erfindungsgemäßen Konzepts, dass innerhalb der Vorladeschaltung ein Vorladewiderstand in Reihe dem elektrischen Bauelement vorgeschaltet ist, welches über ein parallel zum Vorladewiderstand angeordneten Schalter überbrückt ist, so dass das elektrische Bauelement und die Vorladeschaltung als ein einziger 2-Pol in der Vorladeschaltung verbaut sind.

Eine Fortführung des erfindungsgemäßen Konzepts kann darin bestehen, dass eine Mehrzahl an Vorladeschaltungen, welche jeweils einen durch einen Schalter zu überbrückenden Vorladewiderstand aufweisen, parallel zueinander geschaltet sind und in Reihe zu einer Mehrzahl an elektrischen Bauelementen mit mindestens einer funktionalen Ausrichtung als Kondensator und über eine Mehrzahl an MEMS-Schaltern, welche der jeweiligen Vorladeschaltung in Reihe vorgeschaltet sind, anzusteuern sind.

Eine spezielle Ausgestaltung dieses erfindungsgemäßen Konzepts kann darin bestehen, dass der Kontrollprozessor ein integrierter Bestandteil der Vorladeschaltung ist, welcher nicht dezentral im Bereich einer Kommunikationsschnittstelle angeordnet ist.

Eine Erweiterung einer speziellen Ausgestaltung des erfindungsgemäßen Konzepts kann vorsehen, dass das elektrische Bauelement mit mindestens einer funktionalen Ausrichtung als Kondensator weitere Funktionen, insbesondere innerhalb eines Schaltbildes oder Stromverteilungsnetzes aufweist, insbesondere als Messgerät, Verbraucher, Prosumer, Umrichter oder Ähnliches. Das elektrische Bauelement mit mindestens einer funktionalen Ausrichtung als Kondensator ist ein stromführendes Element innerhalb eines Stromkreises bzw. Stromnetzes, welches neben der Funktion und der Funktionsweise eines Kondensators noch weitere Funktionen als kombiniertes Funktionselement aufweisen kann.

Ein vorteilhafter zusätzlicher Aspekt des erfindungsgemäßen Konzepts kann darin bestehen, dass das elektrische Bauelement in einem DC-Stromverteilungsnetz oder in einem Hybridnetz angeordnet ist. Hybridnetze sind Wechselspannungsnetze mit darin angeordneten Gleichspannungsnetzbereichen.

Es entspricht einer speziellen Ausführungsform des erfindungsgemäßen Konzepts, dass der Kontrollprozessor direkte Messwerte zum zu messenden DC-Strom oder zur Eingangs- und Ausgangsspannung aufnimmt und auswertet, so dass über das Ohmsche Gesetz der DC-Strom zu berechnen ist.

Eine Fortführung des erfindungsgemäßen Konzepts kann darin bestehen, dass der Kontrollprozessor Temperaturmesswerte im elektrischen Bauelement mit mindestens einer funktionalen Ausrichtung als Kondensator aufnimmt und auswertet oder die Anzahl der Schaltspiele aufnimmt und anhand einer zulässigen maximalen Schaltspiel-Anzahl auswertet.

Eine spezielle Ausgestaltung dieses erfindungsgemäßen Konzepts kann darin bestehen, dass die Vorladung des Vorladewiderstands unidirektional ausgebildet ist, so dass $I_{DC} > 0$ ist. Eine Erweiterung einer speziellen Ausgestaltung des erfindungsgemäßen Konzepts kann vorsehen, dass die Vorladung des Vorladewiderstands bidirektional ausgebildet ist, so dass $|I_{DC}|$ überprüft wird.

Erfindungsgemäß wird die Aufgabe zudem durch ein Verfahren zum Betrieb einer überwachten Vorladeschaltung in Form eines Zwischenkreises gelöst aufweisend eine Vorladeschaltung und ein überwachbares elektrisches Bauelement mit mindestens einer funktionalen Ausrichtung als Kondensator, insbesondere in einer Anwendung in einem Stromverteilungsnetz, in einer 2-Pol-Anordnung mit den Schritten:

- Schalten eines überwachbaren elektrischen Bauelements mit mindestens einer funktionalen Ausrichtung als Kondensator in Reihe zu einer Vorladeschaltung, welche einen durch einen Schalter zu überbrückenden Vorladewiderstand aufweist;
- Ansteuern des elektrischen Bauelements über einen Kontrollprozessor als integriertem Bestandteil der Vorladeschaltung ;
- Messen und registrieren von Messwerten über den Kontrollprozessor;
- Auswerten der Messwerte mittels des Kontrollprozessors und
- Zuordnen der Messwerte zu einem ordnungsgemäßen Vorladevorgang oder zu einer Überlastung.

Es kann ein zusätzlicher, vorteilhafter Aspekt des Verfahrens sein, dass die Messwerte durch eine direkte Messung des DC-Stroms oder durch Messung der Eingangs- und Ausgangsspannung ermittelt werden, so dass über das Ohmsche Gesetz der DC-Strom zu berechnen ist.

Es entspricht einer speziellen Ausführung des erfindungsgemäßen Verfahrens, dass Temperaturmesswerte des elektrischen Bauelements mit mindestens einer funktionalen Ausrichtung als Kondensator aufgenommen und ausgewertet werden oder die Anzahl der Schaltspiele aufgenommen werden und anhand einer zulässigen maximalen Schaltspiel-Anzahl ausgewertet werden. Eine Fortführung des erfindungsgemäßen Verfahrens kann darin bestehen, dass mittels einer Kombination unterschiedlicher Messauswertungen, welche der Auswertungen des direkten DC-Strom und/oder der Eingangs- und Ausgangsspannung und/oder einer maximalen Anzahl an Schaltspielzyklen und/oder der Temperatur im elektrischen Bauelement entsprechen, eine Zuordnung der ermittelten Messwerte zu einem ordnungsgemäßen Vorladevorgang oder zu einer Überlastung durchgeführt wird. Eine Erweiterung einer speziellen Ausgestaltung des erfindungsgemäßen Verfahrens kann vorsehen, dass eine Mehrzahl an Vorladeschaltungen, welche jeweils einen durch einen Schalter zu überbrückenden Vorladewiderstand aufweisen, parallel zueinander und in Reihe zu einer Mehrzahl an elektrischen Bauelementen mit mindestens einer funktionalen Ausrichtung als Kondensator geschaltet werden und über eine Mehrzahl an MEMS-Schaltern, welche der jeweiligen Vorladeschaltung in Reihe vorgeschaltet sind, angesteuert werden.

Ein vorteilhafter zusätzlicher Aspekt des erfindungsgemäßen Verfahrens kann darin bestehen, dass die Vorladung des Vorladewiderstands unidirektional durchgeführt wird, so dass $I_{DC} > 0$ ist.

Es kann außerdem vorteilhaft sein, dass die Vorladung des Vorladewiderstands bidirektional durchgeführt wird, so dass $|I_{DC}|$ überprüft wird.

Das erfindungsgemäße überwachbare elektrische Bauelement mit mindestens einer funktionalen Ausrichtung als Kondensator, insbesondere ein Kondensator, kann vorzugsweise als Stützkondensator ausgebildet sein, welcher aus einer Mehrzahl parallel geschalteter Kondensatoren zusammengesetzt ist. Das überwachbare elektrische Bauelement mit mindestens einer funktionalen Ausrichtung als Kondensator kann vorzugsweise auch ein Kombigerät oder ein kombiniertes Bauelement sein mit unter anderem einer Funktion, in einem Gleichstromkreis elektrische Ladung und die damit zusammenhängende Energie statisch in einem elektrischen Feld zu speichern. Vorteilhafterweise baut man die Vorladeschaltung parallel zu einem ohnehin vorhandenen Schaltkontakt auf, der sich für den Schaltbetrieb in der Anlage befindet. Erfindungsgemäß kann es vorgesehen sein, dass gegebene Anforderungen an dieses Schaltelement wie z.B. das galvanische Trennen durch die Parallelschaltung weiterhin erfüllt sind. Es entspricht dem Konzept der Erfindung während des Anlagenbetriebs fortwährend zu gewährleisten, dass die Vorladekomponenten auch auf den dahinter liegenden Kondensator abgestimmt sind, auch nachdem z.B. ein solcher Kondensator ausgetauscht wurde. Zudem muss gewährleistet sein, dass eine übergeordnete Anlagensteuerung dafür sorgt, dass eine unter Umständen einzuhaltende maximale Anzahl an Vorladungszyklen pro Zeiteinheit eingehalten wird. Dies kann insbesondere dann wichtig sein, wenn der Vorladewiderstand bei ungünstigen Anlagenbedingungen thermisch stärker belastet wird und Zeit zum Abkühlen benötigt.

Weitere Ausführungen und Vorteile der Erfindung werden nachfolgend anhand von Ausführungsbeispielen sowie anhand der Zeichnung erläutert.

Dabei zeigt:

Fig. 1 ein Schaltbild aus dem Stand der Technik für eine einfache integrierte Vorladeschaltung;

Fig. 2 ein erfindungsgemäßes Schaltbild einer Vorladeschaltung mit einem erfindungsgemäßen überwachbaren elektrischen Bauelement mit mindestens einer funktionalen Ausrichtung als Kondensator in einer ersten Ausführungsform;

Fig. 3 ein erfindungsgemäßes Schaltbild mit einer Mehrzahl an Vorladeschaltungen und erfindungsgemäßen überwachbaren elektrischen Bauelementen mit mindestens einer funktionalen Ausrichtung als Kondensator innerhalb einer Parallelschaltung in einer zweiten Ausführungsform.

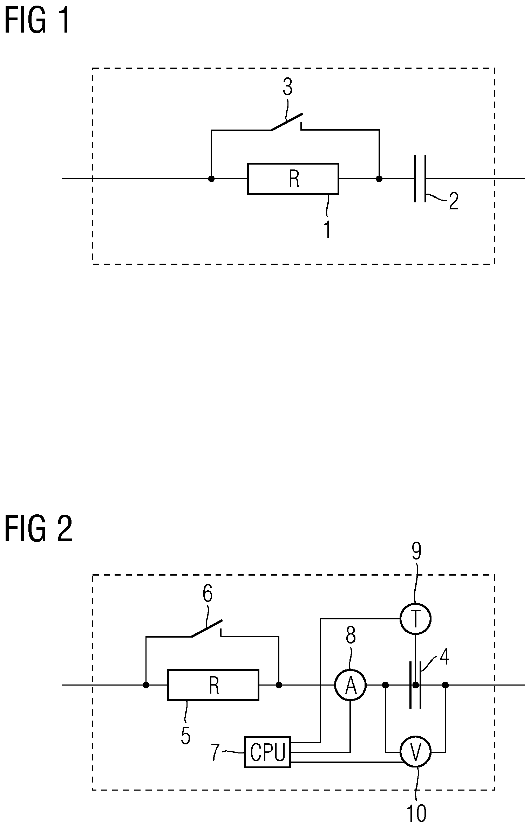

Fig. 1 zeigt ein Schaltbild aus dem Stand der Technik für eine einfache integrierte Vorladeschaltung. Das Schaltbild weist einen Vorladewiderstand 1, welcher in Reihe zu einem Leistungspfad, in welchem ein Kondensator 2 angeordnet ist, geschaltet ist. Parallel zum Vorladewiderstand 1 ist ein Schalter 3 im Schaltbild integriert. Über den Schalter 3 wird der Vorladewiederstand 1 überbrückt, wenn alle Kapazitäten ausreichend vorgeladen sind.

In Fig. 2 ist ein Schaltbild einer Vorladeschaltung mit einem erfindungsgemäßen überwachbaren elektrischen Bauelement mit mindestens einer funktionalen Ausrichtung als Kondensator 4 dargestellt. Die Vorladeschaltung weist einen Vorladewiderstand 5, welcher in Reihe zu einem Leistungspfad, in welchem das elektrische Bauelement 4 angeordnet ist, geschaltet ist. Parallel zum Vorladewiderstand 5 ist ein Schalter 6 im Schaltbild integriert. Über den Schalter 6 wird der Vorladewiederstand 5 überbrückt, wenn alle Kapazitäten ausreichend vorgeladen sind. In die Vorladeschaltung, insbesondere ein Zwischenkreis innerhalb eines Stromverteilungsnetzes, ist außerdem ein Kontrollprozessor 7 integriert. Der Kontrollprozessor 7 weist entweder integrierte Messgeräte auf, welche den Strom und/oder die Spannung und/oder die Temperatur im überwachbaren elektrischen Bauelement 4 oder die die Anzahl der Schaltspiele registrieren, oder es werden externe Messgeräte verwendet, welche in der Vorladeschaltung als Einzelgeräte 8, 9 und 10 oder als kombiniertes Messgerät positioniert sind. Der Vorteil dieser Vorladeschaltung ist, dass der Kontrollprozessor 7 zentraler Bestandteil der Schaltung ist und nicht dezentral im Bereich einer Kommunikationsschnittstelle positioniert ist.

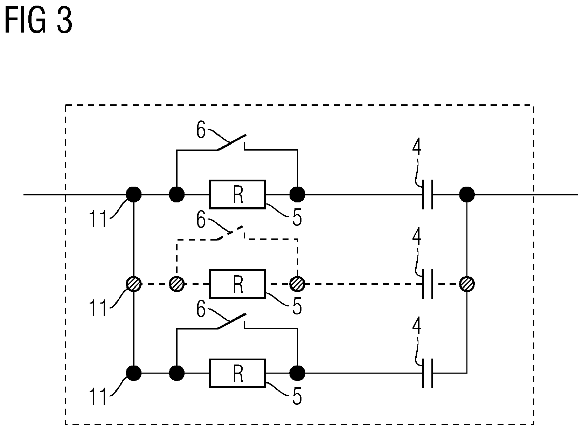

Fig. 3 zeigt ein weiteres erfindungsgemäßes Schaltbild mit einer Mehrzahl an Vorladeschaltungen und erfindungsgemäßen überwachbaren elektrischen Bauelementen mit mindestens einer funktionalen Ausrichtung als Kondensator 4 innerhalb einer Parallelschaltung. Die parallel zu einander positionierten Vorladeschaltungen weisen Vorladewiderstände 5 auf, welche in Reihe zu einem Leistungspfad, in welchem die elektrischen Bauelemente 4 angeordnet sind, geschaltet sind. Jeweils parallel zu den Vorladewiderständen 5 sind Schalter 6 im Schaltbild integriert. Über die Schalter 6 werden die Vorladewiederstände 5 überbrückt, wenn alle Kapazitäten ausreichend vorgeladen sind. Den jeweiligen, parallel zueinander verschalteten Vorladeschaltungen sind MEMS-Schalter 11 vorgeschaltet, welche nach Bedarf die Vorladeschaltungen freigeben können. MEMS-Schalter 11 (Microelectro-mechanical System) sind winzige Bauelemente, die Logikelemente und mikromechanische Strukturen in einem Chip vereinen. Sie können mechanische und elektrische Informationen verarbeiten. Die meisten Elemente sind Sensoren und Aktoren, aber auch Oszillatoren und Filter. Diese Mechatronik-Chips werden meist aus Silizium hergestellt. Die Strukturen können kleiner als ein Mikrometer sein. Dank der Miniaturisierung lassen sie sich wie Halbleiter billig und in Massen fertigen.

Das erfindungsgemäße überwachbare elektrische Bauelement mit mindestens einer funktionalen Ausrichtung als Kondensator, insbesondere ein Kondensator zeichnet sich dadurch aus, dass der Kondensator bzw. das erfindungsgemäße elektrische Bauelement durch eine digitale Steuerung geschützt wird. Es kommt außerdem hinzu, dass die Vorladeschaltungen und Stützkondensatoren bzw. das elektrische Bauelement dauerhaft optimal abgestimmt in der Anlage verbaut sind. Die Stützkapazität und die zugehörige Vorladeschaltung werden zusammengebracht und als einziger 2-Pol verbaut. Auch eine eventuell benötigte zusätzliche Sensorik (Temperatur-, Strom-, Spannungs- und max. Schaltspielüberwachung) ist mit integriert.

Bezugszeichenliste

.1 Vorladewiderstand
2 Kondensator
3 Schalter
4 Überwachbares elektrisches Bauelement mit mindestens einer funktionalen Ausrichtung als Kondensator
5 Vorladewiderstand
6 Schalter
7 Kontrollprozessor
8 Messgerät
9 Messgerät
10 Messgerät
11 MEMS-Schalter

**Patentansprüche**

1. Zweipolanordnung mit einer Vorladeschaltung und einem überwachbaren elektrischen Bauelement mit mindestens einer funktionalen Ausrichtung als Kondensator (4) sowie mit einem übergeordneten Kontrollprozessor (7) mit einem Messgerät, zum Verschalten in der Umgebung eines Stromverteilungsnetzes, wobei die Überwachung, insbesondere zum Schutz vor einer Überlastung, durch den Kontrollprozessor (7) ausgebildet ist, welcher Messwerte aufnimmt und auswertet, wobei der Kontrollprozessor (7) ein integrierter Bestandteil der Vorladeschaltung ist, wobei innerhalb der Vorladeschaltung ein Vorladewiderstand (5) in Reihe dem elektrischen Bauelement (4) vorgeschaltet ist, welches über ein parallel zum Vorladewiderstand (5) angeordneten Schalter (6) überbrückt ist, so dass das elektrische Bauelement (4) und die Vorladeschaltung für den Vorladebetrieb dauerhaft optimal abgestimmt zusammengebracht und als ein einziger 2-Pol verbaut werden.

2. Zweipolanordnung nach Anspruch 1, **dadurch gekennzeichnet, dass** eine Mehrzahl an Vorladeschaltungen, welche jeweils einen durch einen Schalter (6) zu überbrückenden Vorladewiderstand (5) aufweisen, parallel zueinander geschaltet sind und in Reihe zu einer Mehrzahl an elektrischen Bauelementen mit mindestens einer funktionalen Ausrichtung als Kondensator (4) und über eine Mehrzahl an MEMS-Schaltern (11), welche der jeweiligen Vorladeschaltung in Reihe vorgeschaltet sind, anzusteuern sind.

3. 2. Zweipolanordnung nach einem der Ansprüche 1 und 2, **dadurch gekennzeichnet, dass** das elektrische Bauelement mit mindestens einer funktionalen Ausrichtung als Kondensator (4) weitere Funktionen aufweist, insbesondere als Messgerät, Verbraucher, Prosumer, Umrichter oder Ähnliches.

4. Zweipolanordnung nach einem der Ansprüche 1 bis 3, **dadurch gekennzeichnet, dass** das elektrische Bauelement (4) in einem DC-Stromverteilungsnetz oder in einem Hybridnetz angeordnet ist.

5. Zweipolanordnung nach einem der Ansprüche 1 bis 4, **dadurch gekennzeichnet, dass** der Kontrollprozessor (7) direkte Messwerte zum zu messenden DC-Strom oder zur Eingangs- und Ausgangsspannung aufnimmt und auswertet, so dass über das Ohmsche Gesetz der DC-Strom zu berechnen ist.

6. Zweipolanordnung nach einem der Ansprüche 1 bis 5, **dadurch gekennzeichnet, dass** der Kontrollprozessor (7) Temperaturmesswerte im elektrischen Bauelement mit mindestens einer funktionalen Ausrichtung als Kondensator (4) aufnimmt und auswertet oder die Anzahl der Schaltspiele aufnimmt und anhand einer zulässigen maximalen Schaltspiel-Anzahl auswertet.

7. Zweipolanordnung nach einem der Ansprüche 1 bis 6, **dadurch gekennzeichnet, dass** die Vorladung des Vorladewiderstands (5) unidirektional ausgebildet ist, so dass $I_{DC} > 0$ ist.

8. Zweipolanordnung nach einem der Ansprüche 1 bis 6, **dadurch gekennzeichnet, dass** die Vorladung des Vorladewiderstands (5) bidirektional ausgebildet ist, so dass $|I_{DC}|$ überprüft wird.

9. Verfahren zum Betrieb einer überwachten Vorladeschaltung in Form eines Zwischenkreises aufweisend eine Vorladeschaltung und ein überwachbares elektrisches Bauelement mit mindestens einer funktionalen Ausrichtung als Kondensator (4), insbesondere in einer Anwendung in einem Stromverteilungsnetz, in einer 2-Pol-Anordnung nach Anspruch 1 mit den Schritten:

    - Schalten eines überwachbaren elektrischen Bauelements mit mindestens einer funktionalen Ausrichtung als Kondensator (4) in Reihe zur Vorladeschaltung;
    - Ansteuern des elektrischen Bauelements (4) über einen Kontrollprozessor, welcher ein integrierter Bestandteil der Vorladeschaltung ist;
    - Messen und Registrieren von Messwerten mittels des Kontrollprozessors (7);
    - Auswerten der Messwerte mittels des Kontrollprozessors (7) und
    - Zuordnen der Messwerte zu einem ordnungsgemäßen Vorladevorgang oder zu einer Überlastung.

**10.** Verfahren nach Anspruch 9, **dadurch gekennzeichnet, dass** die Messwerte durch eine direkte Messung des DC-Stroms oder durch Messung der Eingangs- und Ausgangsspannung ermittelt werden, so dass über das Ohmsche Gesetz der DC-Strom zu berechnen ist.

**11.** Verfahren nach Anspruch 9, **dadurch gekennzeichnet, dass** Temperaturmesswerte des elektrischen Bauelements mit mindestens einer funktionalen Ausrichtung als Kondensator (4) aufgenommen und ausgewertet werden oder die Anzahl der Schaltspiele aufgenommen werden und anhand einer zulässigen maximalen Schaltspiel-Anzahl ausgewertet werden.

**12.** Verfahren nach einem der Ansprüche 9 bis 11, **dadurch gekennzeichnet, dass** mittels einer Kombination unterschiedlicher Messauswertungen, welche den Auswertungen des direkten DC-Stroms und/oder der Eingangs- und Ausgangsspannung und/oder einer maximalen Anzahl an Schaltspielzyklen und/oder der Temperatur im elektrischen Bauelement (4) entsprechen, eine Zuordnung der ermittelten Messwerte zu einem ordnungsgemäßen Vorladevorgang oder zu einer Überlastung durchgeführt wird.

**13.** Verfahren nach einem der Ansprüche 9 bis 12, **dadurch gekennzeichnet, dass** eine Mehrzahl an Vorladeschaltungen, welche jeweils einen durch einen Schalter (6) zu überbrückenden Vorladewiderstand (5) aufweisen, parallel zueinander und in Reihe zu einer Mehrzahl an elektrischen Bauelementen mit mindestens einer funktionalen Ausrichtung als Kondensator (4) geschaltet werden und über eine Mehrzahl an MEMS-Schaltern (11), welche der jeweiligen Vorladeschaltung in Reihe vorgeschaltet sind, angesteuert werden.

**14.** Verfahren nach einem der Ansprüche 9 bis 13, **dadurch gekennzeichnet, dass** die Vorladung des Vorladewiderstands (5) unidirektional durchgeführt wird, so dass $I_{DC} > 0$ ist.

**15.** Verfahren nach einem der Ansprüche 9 bis 13, **dadurch gekennzeichnet, dass** die Vorladung des Vorladewiderstands (5) bidirektional durchgeführt wird, so dass $|I_{DC}|$ überprüft wird.

**16.** Verwendung einer Zweipolanordnung nach einem der Ansprüche 1 bis 8 in einer Automatisierungsanlage.

**17.** Verwendung einer Zweipolanordnung nach einem der Ansprüche 1 bis 8 in der Antriebstechnik.

**18.** Verwendung einer Zweipolanordnung nach einem der Ansprüche 1 bis 8 in der Leistungselektronik.

**Claims**

**1.** Two-pole arrangement with a precharge circuit and a monitorable electrical component with at least one functional alignment as capacitor (4) and also with a superordinate control processor (7) with a measuring device, for interconnection in the environment of a power distribution network, wherein the monitoring, in particular for protection against an overloading, is implemented by the control processor (7), which records and evaluates measurement values, wherein the control processor (7) is an integrated part of the precharge circuit, wherein within the precharge circuit a precharge resistor (5) is connected upstream of and in series with the electrical component (4), which is bridged via a switch (6) arranged in parallel with the precharge resistor (5), such that the electrical component (4) and the precharge circuit are brought together in a manner permanently optimally coordinated for precharge operation and are installed as a single 2-pole system.

**2.** Two-pole arrangement according to Claim 1, **characterized in that** a plurality of precharge circuits each having a precharge resistor (5) to be bridged by a switch (6) are connected in parallel with one another and are to be controlled in series with a plurality of electrical components with at least one functional alignment as capacitor (4) and via a plurality of MEMS switches (11) connected upstream of and in series with the respective precharge circuit.

**3.** Two-pole arrangement according to either of Claims 1 and 2, **characterized in that** the electrical component with at least one functional alignment as capacitor (4) has further functions, in particular as measuring device, consumer, prosumer, converter or the like.

**4.** Two-pole arrangement according to any of Claims 1 to 3, **characterized in that** the electrical component (4) is arranged in a DC power distribution network or in a hybrid network.

**5.** Two-pole arrangement according to any of Claims 1 to 4, **characterized in that** the control processor (7) records and evaluates direct measurement values concerning the DC current to be measured or concerning the input and output voltages, such that the DC current is to be calculated by way of Ohm's law.

**6.** Two-pole arrangement according to any of Claims 1 to 5, **characterized in that** the control processor (7) records and evaluates temperature measurement values in the electrical component with at least one functional alignment as capacitor (4) or records the number of switching cycles and evaluates it on the basis of a permissible maximum number of switching cycles.

7. Two-pole arrangement according to any of Claims 1 to 6, **characterized in that** the precharge of the precharge resistor (5) is implemented unidirectionally, such that $I_{DC} > 0$.

8. Two-pole arrangement according to any of Claims 1 to 6, **characterized in that** the precharge of the precharge resistor (5) is implemented bidirectionally, such that $|I_{DC}|$ is checked.

9. Method for operating a monitored precharge circuit in the form of a link circuit having a precharge circuit and a monitorable electrical component with at least one functional alignment as capacitor (4), in particular in an application in a power distribution network, in a 2-pole arrangement according to Claim 1, comprising the following steps:

    - connecting a monitorable electrical component with at least one functional alignment as capacitor (4) in series with the precharge circuit;
    - controlling the electrical component (4) by way of a control processor, which is an integrated part of the precharge circuit;
    - measuring and registering measurement values by means of the control processor (7);
    - evaluating the measurement values by means of the control processor (7) and
    - assigning the measurement values to a proper precharge process or to an overloading.

10. Method according to Claim 9, **characterized in that** the measurement values are determined by means of a direct measurement of the DC current or by means of measurement of the input and output voltages, such that the DC current is to be calculated by way of Ohm's law.

11. Method according to Claim 9, **characterized in that** temperature measurement values of the electrical component with at least one functional alignment as capacitor (4) are recorded and evaluated or the number of switching cycles is recorded and evaluated on the basis of a permissible maximum number of switching cycles.

12. Method according to any of Claims 9 to 11, **characterized in that** by means of a combination of different measurement evaluations corresponding to the evaluations of the direct DC current and/or the input and output voltages and/or a maximum number of switching cycles and/or the temperature in the electrical component (4), an assignment of the measurement values determined to a proper precharge process or to an overloading is carried out.

13. Method according to any of Claims 9 to 12, **characterized in that** a plurality of precharge circuits each having a precharge resistor (5) to be bridged by a switch (6) are connected in parallel with one another and in series with a plurality of electrical components with at least one functional alignment as capacitor (4) and are controlled via a plurality of MEMS switches (11) connected upstream of and in series with the respective precharge circuit.

14. Method according to any of Claims 9 to 13, **characterized in that** the precharge of the precharge resistor (5) is carried out unidirectionally, such that $I_{DC} > 0$.

15. Method according to any of Claims 9 to 13, **characterized in that** the precharge of the precharge resistor (5) is carried out bidirectionally, such that $|I_{DC}|$ is checked.

16. Use of a two-pole arrangement according to any of Claims 1 to 8 in an automation installation.

17. Use of a two-pole arrangement according to any of Claims 1 to 8 in drive technology.

18. Use of a two-pole arrangement according to any of Claims 1 to 8 in power electronics.

**Revendications**

1. Montage bipolaire, comprenant un circuit de précharge et un composant électrique pouvant être contrôlé, ayant au moins un agencement fonctionnel sous la forme d'un condensateur (4) ainsi qu'un processeur (7) de commande supérieur hiérarchiquement avec un appareil de mesure, pour le montage dans l'environnement d'un réseau de distribution d'électricité, dans lequel le contrôle, notamment pour la protection vis à vis d'une surcharge, est constitué par le processeur (7) de commande, qui reçoit et exploite des valeurs de mesure, dans lequel le processeur (7) de commande est une partie constitutive intégrée du circuit de précharge, dans lequel, dans le circuit de précharge une résistance (5) de précharge est montée en série, avant le composant (4) électrique, lequel est shunté par un interrupteur (6) monté en parallèle à la résistance (5) de précharge, de manière à ce que le composant (4) électrique et le circuit de précharge soient mis ensemble de manière adaptée au mieux en permanence pour le fonctionnement de précharge et soient sous la forme d'un bipôle unique.

**2.** Montage bipolaire suivant la revendication 1, **caractérisé en ce qu'**une pluralité de circuits de précharge, qui ont chacun une résistance (5) de précharge à shunter par un interrupteur (6), sont montés en parallèle entre eux et sont à commander en série avec une pluralité de composants électriques ayant au moins un agencement fonctionnel sous la forme d'un condensateur (4) et par une pluralité d'interrupteurs (11) MEMS, qui sont montés en série avant le circuit respectif de précharge.

**3.** Montage bipolaire suivant l'une des revendications 1 et 2, **caractérisé en ce que** le composant électrique, ayant au moins un agencement fonctionnel comme condensateur (4), a d'autres fonctions, notamment comme appareil de mesure, consommateur, prosumeur, convertisseur ou analogue.

**4.** Montage bipolaire suivant l'une des revendications 1 à 3, **caractérisé en ce que** le composant (4) électrique est monté dans un réseau de distribution de courant continu ou dans un réseau hybride.

**5.** Montage bipolaire suivant l'une des revendications 1 à 4, **caractérisé en ce que** le processeur (7) de commande reçoit et exploite des valeurs de mesure directes se rapportant au courant à continu à mesurer ou à la tension d'entrée et de sortie, de manière à pouvoir calculer le courant continu par la loi d'Ohm.

**6.** Montage bipolaire suivant l'une des revendications 1 à 5, **caractérisé en ce que** le processeur (7) de commande reçoit et exploite des valeurs de mesure de la température dans le composant électrique ayant au moins un agencement fonctionnel sous la forme d'un condensateur (4) ou reçoit le nombre des commutations et effectue l'exploitation à l'aide d'un nombre de commutations maximum admissible.

**7.** Montage bipolaire suivant l'une des revendications 1 à 6, **caractérisé en ce que** la précharge de la résistance (5) de précharge est constituée unidirectionnellement de sorte que $I_{DC} > 0$.

**8.** Montage bipolaire suivant l'une des revendications 1 à 6, **caractérisé en ce que** la précharge de la résistance (5) de précharge est constituée bi-directionnellement, de manière à contrôler $|I_{DC}|$.

**9.** Procédé pour faire fonctionner un circuit de précharge contrôlé sous la forme d'un circuit intermédiaire ayant un circuit de précharge et un composant électrique pouvant être contrôlé ayant au moins un agencement fonctionnel sous la forme d'un condensateur (4), notamment dans une application dans un réseau de distribution de courant, dans un montage à deux pôles suivant la revendication 1, comprenant les stades :

- mise en circuit d'un composant électrique pouvant être contrôlé ayant au moins un agencement fonctionnel sous la forme d'un condensateur (4) en série avec le circuit de précharge ;
- commande du composant (4) électrique par un processeur de commande, qui est une partie constitutive intégrée du circuit de précharge ;
- mesure et enregistrement de valeurs de mesure au moyen du processeur (7) de commande ;
- exploitation des valeurs de mesure au moyen du processeur (7) de commande et
- affectation des valeurs de mesure à une opération de précharge en bon ordre ou à une surcharge.

**10.** Procédé suivant la revendication 9, **caractérisé en ce que** l'on détermine les valeurs de mesure par une mesure directe du courant continu ou par une mesure de la tension d'entrée ou de sortie, de manière à calculer le courant continu par la loi d'Ohm.

**11.** Procédé suivant la revendication 9, **caractérisé en ce que** l'on reçoit et exploite des valeurs de mesure de la température du composant électrique ayant au moins un agencement fonctionnel sous la forme d'un condensateur (4) ou on enregistre le nombre des commutations et on l'exploite à l'aide d'un nombre de commutations maximum admissible.

**12.** Procédé suivant l'une des revendications 9 à 11, **caractérisé en ce que**, au moyen d'une combinaison d'exploitations de mesures différentes, qui correspondent aux exploitations du courant continu direct et/ou de la tension d'entrée et de sortie et/ou d'un nombre maximum de cycles de commutation et/ou de la température du composant (4) électrique, on effectue une affectation des valeurs de mesure déterminées à une opération de précharge en bon ordre ou à une surcharge.

**13.** Procédé suivant l'une des revendications 9 à 12, **caractérisé en ce qu'**une pluralité de circuits de précharge, qui ont chacun une résistance (5) de précharge à shunter par un interrupteur (6) sont montés en parallèle entre eux et sont à commander en série avec une pluralité de composants électriques ayant au moins un agencement fonctionnel sous la forme d'un condensateur (4) et par une pluralité d'interrupteurs (11) MEMS, qui sont montés en série avant le circuit respectif de précharge.

**14.** Procédé suivant l'une des revendications 9 à 13, **caractérisé en ce que** la précharge de la résistance (5) de précharge est constituée unidirectionnellement de manière à ce que $I_{DC} > 0$.

**15.** Procédé suivant l'une des revendications 9 à 13, **ca-**

**ractérisé en ce que** la précharge de la résistance (5) de précharge est constituée bi-directionnellement, de manière à contrôler $|I_{DC}|$.

16. Utilisation d'un montage bipolaire suivant l'une des revendications 1 à 8, dans une installation d'automatisation.

17. Utilisation d'un montage bipolaire suivant l'une des revendications 1 à 8 dans la technique d'entraînement.

18. Utilisation d'un montage bipolaire suivant l'une des revendications 1 à 8 dans l'électronique de puissance.

FIG 1

FIG 2

## FIG 3

**EP 3 654 507 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2400649 A
- US 2018134169 A
- CN 201069461 Y
- US 2015180400 A
- EP 2562937 A